# EUROPEAN PATENT SPECIFICATION

(11) **EP 1 177 682 B1**
(45) Date of publication and mention of the grant of the patent: **11.08.2004**
(21) Application number: 00926407.8
(22) Date of filing: 27.04.2000
(51) Int. Cl.: H04N 5/00, H04N 7/16, H04N 7/173

(54) **A STATUS MONITORING AND DATA PROCESSING SYSTEM SUITABLE FOR USE IN A BI-DIRECTIONAL COMMUNICATION DEVICE**
KABELINTEGRITÄTSPRÜFUNGSTECHNIK FÜR ENTFERNTE HAUSSICHERHEITSÜBERWACHUNG
SYSTEME DE TRAITEMENT DE DONNEES ET DE CONTROLE D'ETAT UTILISE DANS UN DISPOSITIF DE COMMUNICATION

(30) Priority: 30.04.1999 US 131977 P
(43) Date of publication of application: 06.02.2002
(73) Proprietor: Thomson Licensing S.A., 92648 Boulogne Cedex (FR)
(72) Inventor: RAMEY, Blaine, Edward, Indianapolis, IN 46220 (US); POLIT, Peter, Paul, Indianapolis, IN 46236 (US)
(74) Representative: Berthier, Karine
(86) International application number: PCT/US2000/011257
(87) International publication number: WO 2000/067471

(56) References cited:
- EP-A- 0 849 948
- EP-A- 0 859 515
- US-A- 5 574 495

## Description

### FIELD OF THE INVENTION

This invention relates to monitoring and message processing systems for use in communication devices for security and status monitoring and other purposes.

### BACKGROUND OF THE INVENTION

Security systems that allow a central monitoring system to gather information from remote automated data collection devices are widely used. These systems generally gather data from intrusion detection devices and other sensors at the remote site, then send this data to the central system on a periodic basis over a Public Switched Telephone System (PSTN). If the data indicates that an intrusion or other situation requiring attention has occurred, the central station can alert the homeowner, security personnel or emergency services.

One problem with this system is that a malfunction at a remote station may go undetected for a significant time. Conventional system design comprises a central station that originates calls to the remote station at some interval to collect data. This interval will generally be tens of minutes to avoid over-use of the telephone lines that are shared by multiple services at both the central station and at the subscriber's location. If the remote station malfunctions due to device failure or a cut telephone line, the central station will sense this condition as an unanswered call to that station. (If the line is otherwise in use, e.g. for a voice call, a busy signal will be returned and the central station will try again, probably at a shortened polling interval.) The time before the central station detects an unresponsive remote could be as long as the polling interval or even longer if the subscriber's line is used for multiple services, thus decreasing the effectiveness of response to an emergency.

A similar problem exists if the system is designed such that the remote station originates calls to the central station. Again, to avoid over-use of the shared telephone lines, these calls will be made at some interval. Since the line could be in use when the remote station attempts to call, the remote station may have to attempt the call at a later time. If the remote station malfunctions, the central station will sense this condition as a call that did not arrive when expected. As with calls originated by the central station, the time before the central station detects an unresponsive remote station could be as long as the polling interval or even longer if the subscriber's line is not dedicated to the security system.

It has been known to continuously monitor bit error rates in set-top boxes by United Stated Patent n° 5,574,495.

It is highly desirable to obtain a system and method that eliminates the aforementioned problems.

### SUMMARY OF THE INVENTION

It is an object of the invention to provide a cable modem that maintains an active computer network compatible communication link that is "on" even when the modem power switch is in the "off" condition. This allows the modem to provide operational home information at more frequent time intervals and at low cost for use in verifying modem and cable line integrity.

The present invention is embodied in a method for monitoring operational status information in a device capable of computer network compatible bi-directional communication and incorporating a user operated power switch. The method comprises the steps of establishing a communication link between the device and a remote location, maintaining the communication link active when the device power switch is in an off condition, the communication link being established in a packet switched network using a network compatible protocol; generating operational condition home information for the device at a substantially periodic rate; and transmitting the status information on the established communication link. The rate at which operational condition status information is generated is sufficient to enable identification of the operational condition within two minutes from initiation of the operational condition. The condition home information transmitted is suitable to identify at least one of (a) a fault on the communication channel link, and (b) a fault with the device The information transmitted over the communication link via the cable modem may include video and/or audio data.

When monitoring information is received, message data is preferably derived from predetermined information in a database in the device, and sent to a predetermined message recipient. The message data comprises at least one of an electronic mail message, a pager message, an emergency services message, and a message indicative code.

A diagnostic detection system and method may be implemented via use of a cable modem in communication with a cable modem termination system (CMTS). A cable modem shares the bandwidth along a cable network system with multiple users located within a common geographical region. In the event an anomalous condition occurs, such as a power outage or major cable failure, data transmitted from each of the cable modems connected to the cable network and received at the CMTS is analyzed by a software program to determine whether the anomaly is isolated to an individual device or to multiple subscribers within the common geographical region. The data or absence of data transmissions from each of the polled cable modems within a given node is useful to enable the a central monitoring station to diagnose the problem and facilitate resolution.

### BRIEF DESCRIPTION OF THE DRAWINGS

The advantages, nature, and various additional features of the invention will appear more fully upon consideration of the illustrative embodiments now to be described in detail in connection with accompanying drawings wherein:
FIG. 1 depicts depicted a cable modem-based security monitor system according to the present invention.
FIGs. 2A and 2B represent schematic diagrams of the major features of a cable modem useful for carrying out the present invention.
FIG. 3 represents a more detailed illustration of the major functional components and hardware architecture associated with a cable modem useful for carrying out the present invention.
FIG. 4 represents a more detailed illustration of the major components associated with a particular cable modem useful for carrying out the present invention.
FIG. 5 depicts an exemplary embodiment of a phone/videophone/remote video monitoring system utilizing a cable modem according to the present invention.
FIG. 6 illustrates a flow diagram of the process steps involved in the cable verification, monitoring and diagnostic detection process according to the present invention.

### DETAILED DESCRIPTION OF THE INVENTION

Before embarking on a detailed discussion, the following should be understood. Cable modems are relatively new to the Internet. Until recently, the only way to transmit information between home computers and the Internet was through telephone-based modems. Like telephone modems, cable modems link to your computer and translate data. Cable modems, however, are many times faster than telephone modems, and they possess added functionality enabling them to perform additional tasks.

The word "Modem" is an acronym that stands for "Modulate / Demodulate" A normal telephone modem "modulates" data, so that it can be transmitted in analog form, and "demodulates" incoming signals so that your computer's digital processor can understand them. The invention of the telephone modem allowed data to be sent easily and cheaply, throughout the world, and helped create the reality of the Internet

Cable modems represent the next great leap in transmission technology. Like telephone modems, cable modems also modulate and demodulate data, converting it from digital to analog and vice versa. Cable modems translate a computer's digital information into analog RF (Radio Frequency) signals, similar to those used by a conventional television, for example, to enable the information to be sent over a cable network.

Cable modems, while conceptually similar to normal telephone modems, are much more sophisticated. Telephone modems generally connect to a computer's COM (Communications) port, a standard but slow component of any home computer system. COM ports have been part of home computers for over a decade, and were never designed to handle data at the high speeds cable modems can attain. Unlike most telephone modems, which are often in the form of a PC card within a computer, cable modems are typically external devices. Cable modems are usually housed in metal boxes, with several activity lights on the front. When the modem is in use, these lights indicate network activity.

Cable modems typically use a NIC (Network Interface Card), such as an Ethernet card, which fits into the standard PCI, ISA or PCMCIA slots in a computer NIC cards allow for much faster data transmission than standard COM ports.

Cable modems are designed to transfer data at very high speeds They are much faster than telephone modems, and do not suffer from the limitations of having to attach to your computer's COM port or connecting to copper-wire local networks. Individual cable modem speeds vary, depending on the type and model of modem. Typically, they are capable of speeds ranging between 500 kbps and 10 Mbps, and more.

Symmetrical cable modems send and receive data at the same speed That is, data travels at the same speeds in both directions - from your computer (upstream) to the Internet (or virtual private network or intranet) and from the Internet to your computer (downstream). Some cable modems are designed to transmit data asymmetrically. In this type of setup, the upstream data flow often has less bandwidth allocated to it than the downstream flow. This arrangement reflects the fact that downstream demands on home consumer networks are usually higher than upstream requirements.

In the system according to the present invention, the cable modem (CM) and cable modem termination system (CMTS) comply with DOCSIS 1.0 (Data Over Cable Service Interface Specification 1.0) requirements ratified by the International Telecommunications Union (ITU) March 1998 and as specified in RFC 2669 (Request For Comment Document 2669). These devices are designed to perform a periodic range request at intervals of about ten seconds, during which the presence of the CM is made known to the CMTS. If the CMTS does not receive the range request after about thirty seconds, it will flag the CM as being off-line and remove it from its active device map. This mechanism may be used to set an alarm for a remote security monitoring system. In this manner, the system may detect a malfunctioning device or damaged cable in less than one minute.

Since the amount of data collected by security systems is relatively small, and since cable modems are high-speed data devices, the polling time could be significantly shortened relative to prior art devices This would provide more accurate, up-to-date information to the central monitoring station. In addition, because cable modems may be designed to be always "on" even when their power switch is turned "off", they continue to send range requests and maintain a presence on the network. In the event of a power outage or major cable failure, data from the CMTS could be analyzed by a program to recognize whether a problem is isolated to an individual device or to multiple subscribers within a common geographical area, thus reducing the possibility of false alarms.

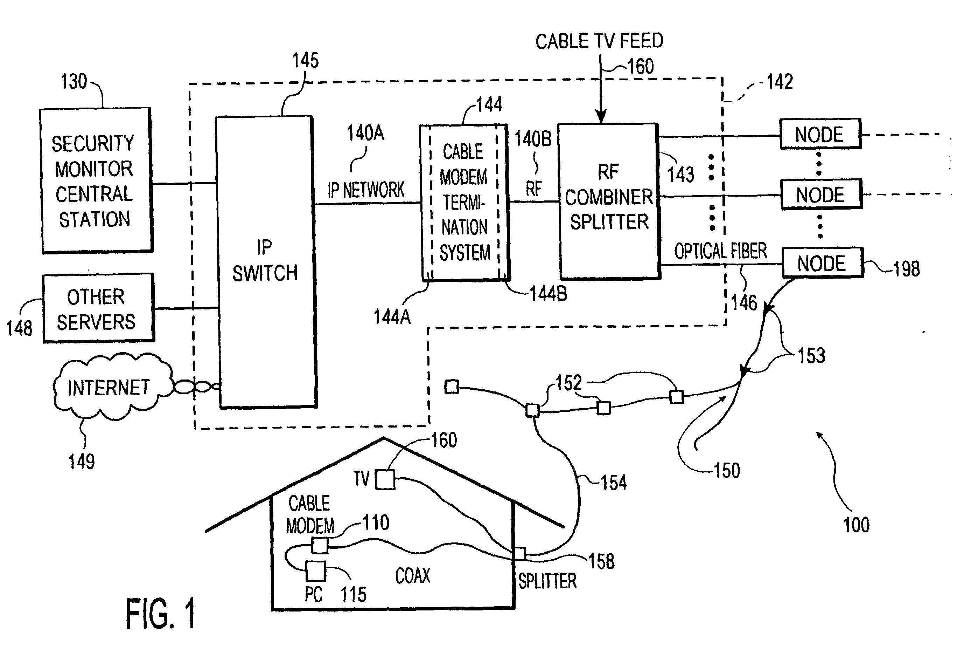

Referring now to Figure 1, there is depicted a cable modem-based security monitor system 100 embodying the present invention. The system comprises a cable modem 110 having security monitoring features therein and operative to transmit alarm information to a remote security monitor central station. A remote terminal 115 such as a personal computer (PC) or other computing device is operative to provide a user interface to the cable modem to set up and configure the home monitoring system. Information is transmitted between the cable modem and the security monitoring central station 130 over an IP network comprising cable network RF portion 140B and data network portion 140A. Located at the cable headend 142 is a Cable Modem Termination System (CMTS) 144. The CMTS 144 instructs a cable modem when to transmit signals upstream and which channel to use. The CMTS demodulates upstream signals, translates these signals back into Internet protocol (IP) packets and redirects them to a central switching system 145 The central switch redirects the IP packets to an IP router (not shown) for transmission across the Internet 149. The Security Monitor Central station 130 is a centralized computer which may be implemented as one of a plurality of servers 148 which are connected to the data switch system 145 for transmitting and receiving information to and from a cable modem. The other servers 148 include, for example, time of day servers, provisioning servers and other severs having well known functions which enable the cable system to perform properly. The CMTS typically includes a network side interface 144A where data in the form of Ethernet data is bi-directionally communicated between the data switch 145 and CMTS 144 over a channel such as an Ethernet channel. The CMTS further includes an RF side interface 144B where RF signal data is bi-directionally communicated between the combiner module 143 and the CMTS. Generally, a unidirectional signal 160 such as a television signal is input to combiner/splitter 143 which combines signal 160 with the RF signal containing the information data from the CMTS for transmission over the fiber optic cable and coaxial cable network system. The CMTS modulates downstream signals for transmission across Hybrid Fiber Coax (HFC) cables to the subscribers homes. Preferably, one CMTS will normally provide support for up to 1000 simultaneous cable modem subscribers across a single 6MHz channel. If more cable modems are required the number of channels may be increased by adding more channels to the CMTS.

Connected to the CMTS and cable headend 142 are multiple fiber optic cables such as those depicted as reference numeral 146 in Figure 1. These cables each terminate at a corresponding fiber coaxial neighborhood node 198 that enters various neighborhood locations that serve a smaller number of homes. A fiber optic neighborhood node is placed between every fiber optic cable 146 and trunk cable or coaxial distribution cable 150 Connected to the coaxial distribution cable 150 is a branch network of subscriber nodes 152 which connect to coaxial drop cables or taps 154 that enter the subscribers homes and connect to cable modem 110 and/or to another device 160. Device 160 may be a set-top box (receiver) for a television, for example. A conventional splitter device 158 may be used to connect cable 154 with both the cable modem 110 and device 160. Amplifiers 153 may be inserted at various stages along the length of the cable system to amplify the upstream and/or downstream signals.

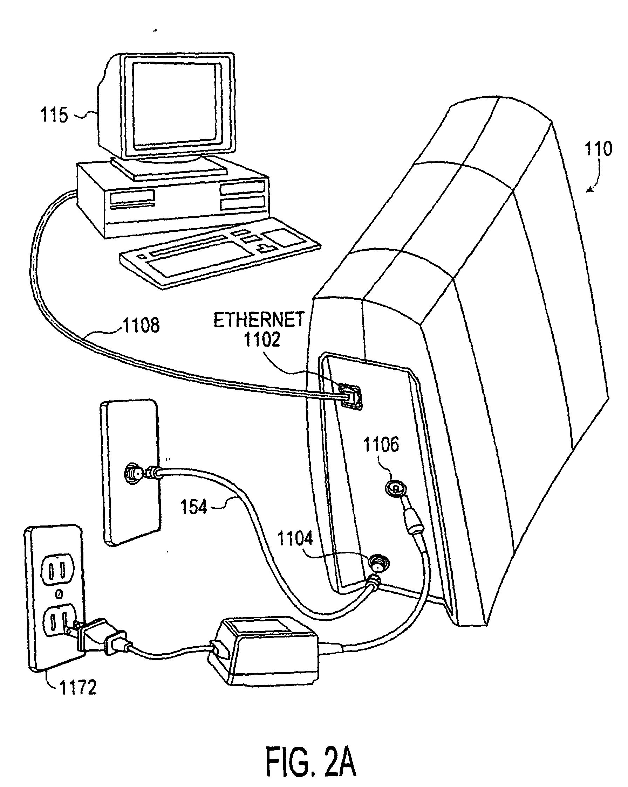

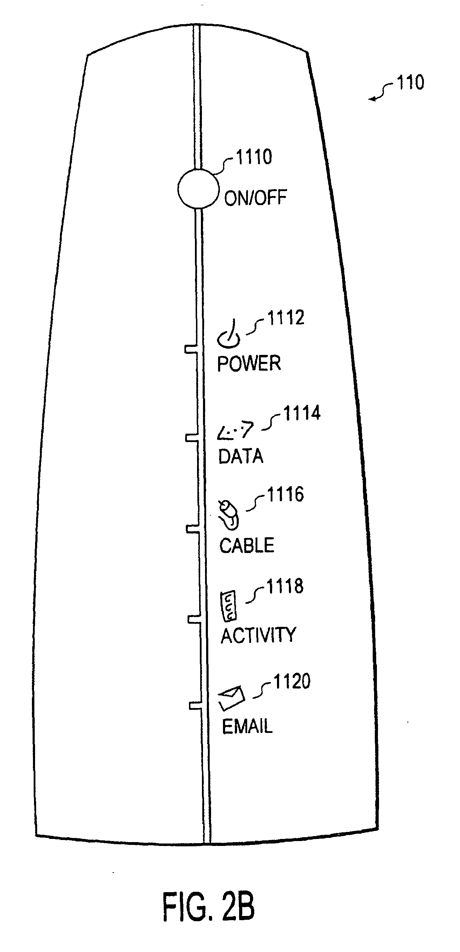

Figures 2A and 2B provide exemplary illustrations of features of a cable modem suitable for use in carrying out the present invention. Referring now to Figure 2A, cable modem 110 includes a data port 1102 such as an Ethernet port for communicating Ethernet data over a bi-directional channel 1108 to a peripheral device such as a personal computer. The cable modem includes an Ethernet interface for communicating with the peripheral device Cable modem terminal 1104 is suitable for coupling the coaxial cable to cable modem 110. In addition, the modem includes terminal 1106 suitable for connecting to a power source, such as a wall outlet. Terminal 1106 is preferably a power AC adapter terminal for connection to an AC outlet. It should be noted that in order for the cable modem verification and monitoring system to function as intended, no connection to the PC is actually required, since the PC may be turned off at any time. The cable modem maintains its own presence on the network independent of the PC.

Figure 2B illustrates features of the cable modem 110 in addition to those depicted in Figure 2A. Referring now to Figure 2B, cable modem 110 further includes a user operable on/off switch 1110 which turns the modem on or places it in an "off' or "standby" mode. Placing the on/off switch 1110 in the "off" position operates to terminate communication with the peripheral device such as the personal computer while allowing for continued status monitoring from the cable network One such example of a cable modem suitable for use in carrying out the present invention is the RCA DCM105 Digital Cable Modem. This cable modem provides two-way, high speed Internet access to a peripheral device such as a personal computer. The DCM105 is suitable for use in home, small office and educational settings, for example and operates through existing cable TV networks. Subscribers may access interactive multimedia services on the Internet and send and receive information at speeds up to 100 times faster than a 28.8 Kbps telephone modem.

The cable modem 110 also includes a series of light indicators comprising power indicator 1112, data indicator 1114, cable indicator 1116, activity indicator 1118 and email indicator 1120. Power indicator 1112 indicates whether the cable modem is in the active or stand-by mode of operation. In a preferred embodiment, the indicator is off (i.e. extinguished) when the modem is in "standby" mode and on (i.e. illuminated) when power is activated. Data indicator 1114 indicates whether the Ethernet connection is active, ready to transmit/receive, or actually transmitting/receiving (T/R). The indicator is off when no Ethernet carrier is present or the modem is in standby mode, on when the Ethernet carrier is present but there is no T/R activity and flashing when there is Ethernet activity and T/R activity. The cable indicator 1116 indicates the status of the cable connection and is off when no cable connection is detected or the modem is in standby mode, flashing when the cable connection is detected but not yet ready to send or receive data, and fully illuminated when the modem is registered with the network and data can be sent. The activity indicator 1118 indicates the existence of data traffic in the cable lines. The indicator light is off when no data traffic is present and flashing when data activity exists. The email indicator 1120 flashes periodically when a user has email.

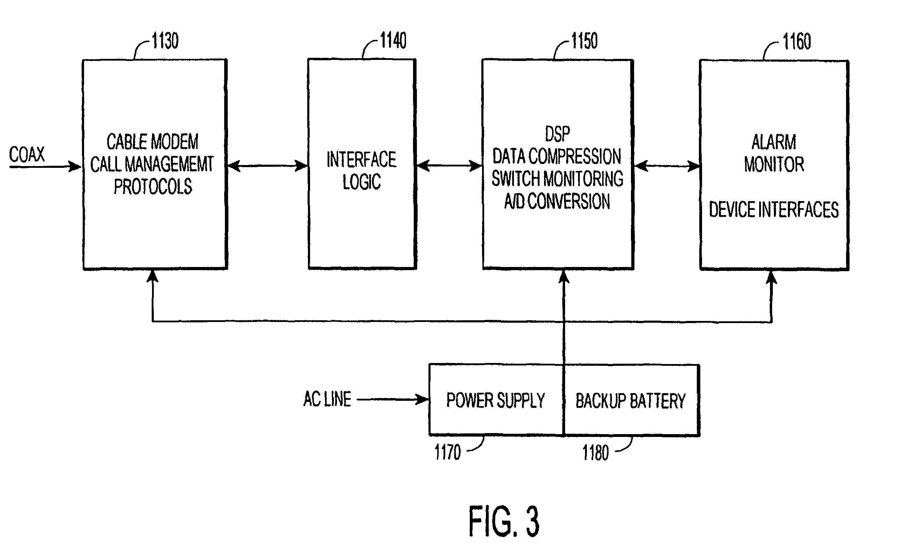

Figure 3 represents a more detailed illustration of the major functional components and hardware architecture associated with the cable modem of Figure 2A and 2B. Referring now to Figure 3, the cable modem includes protocol management module 1130 for handling various protocols associated with transmitting and receiving the TC/IP packetized data stream to/from the coaxial cable, including for example, audio, video, and other protocols necessary for communicating with the CMTS and monitoring system. Interface logic module 1140 is coupled between the cable modem protocol manager 1130 and digital signal processor (DSP) 1150 and includes protocol handling and packet processing functionality to allow communication therebetween. DSP 1150 functionality includes data compression, switch monitoring and A/D conversion for audio and video, in addition to communications protocol processing. The cable modem may optionally handle telephony in addition to the home security or home appliance monitoring techniques described above. The DSP 1150 communicates with device interface and alarm monitor module 1160 to obtain information from peripheral devices such as a personal computer or home appliance including monitoring equipment such as door switch alarms, temperature sensors, and audio and video surveillance equipment, for example. The cable modem may transmit operational condition status information such as an alarm indication, an indication of the status of a particular monitoring device coupled through the cable modem, or a message indicating a particular status associated with the cable modem or the monitor device. The status information may be generated at a substantially periodic rate and may include video or audio data, for example. Power supply module 1170 is preferably coupled to an AC signal source for powering the cable modem, and may include a backup battery unit 1180 for providing auxiliary power.

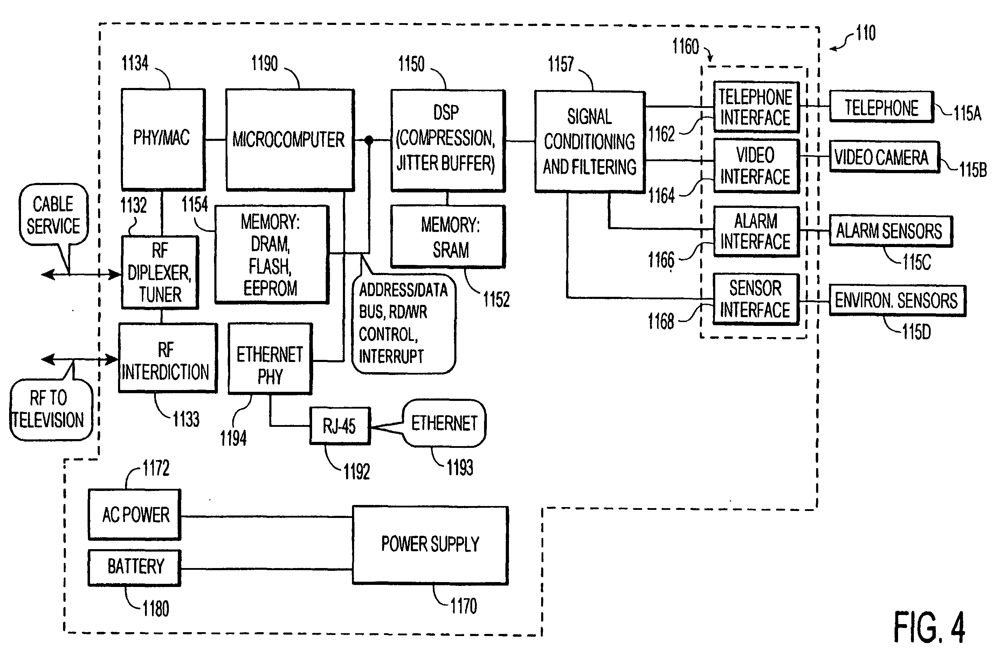

Figure 4 provides a more detailed illustration of the major components associated with a cable modem 110 used in implementing the home security and diagnostic system of the present invention. Figure 4 shows a microcomputer 1190 coupled via an appropriate adapter 1192 and physical access layer module 1194 to an external device such as a personal computer over an Ethernet channel 1193. Microcomputer 1190 is coupled to a memory device 1154 for quick storage and retrieval of information. Cable service is provided via RF transceiver module 1132 and MCNS module 1134. Module 1133 operates as an interface to a remote unit such as a television set and acts as a filter for providing selected services conveyed in the RF signal from the cable head-end to a subscriber. DSP 1150 is connected to microcomputer 1190 and to memory device 1152 for handling various signal processing activities including voice and video compression and packetization and header processing by microcomputer 1190. Signal conditioning and filtering module 1157 is coupled to DSP 1150 and to interface circuitry 1160 for performing A/D conversion, filtering, level equalization and associated analog functions for signals from units 115A-115D. Interface circuitry 1160 couples the various monitoring devices to the cable modem and may include circuitry for a telephone interface 1162, video interface 1164, alarm interface 1166 and sensor interface 1168, for example. Telephone interface circuitry 1162 may, for example, provide functions such as supplying dial tone and ringing signals as well as two-wire to four-wire conversion. Video interface circuitry 1164 includes electronic circuitry for receiving the video signal from video camera 115B and placing it onto a data stream in a format suitable for receipt by the signal conditioning and filtering module 1157. Alarm interface circuitry 1166 includes electronic circuitry for reading and processing binary (on/off type) signals while sensor interface circuitry includes analog circuitry for supplying power to environmental sensors 115D such as temperature monitoring sensor as well as performing first level signal conditioning prior to signal conditioning performed at module 1157. In a preferred embodiment, interface circuitry module 1160 interfaces with each of the peripheral monitoring units 115A, 115C and 115D over twisted pair channels while video monitor 115B is coupled to the video interface 1164 over a coaxial cable The modem is powered via switching power supply 1170 coupled to AC power source 1172 and to backup battery 1180.

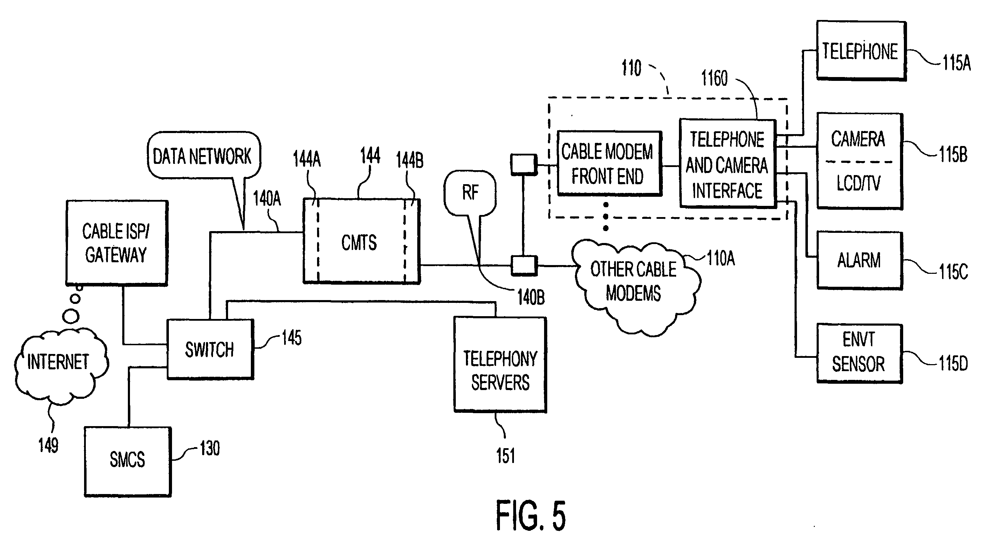

Figure 5 depicts an exemplary embodiment of a phone/videophone/remote video monitoring system utilizing a cable modem according to the present invention As shown in Figure 5, cable modem 110 is coupled to remote devices 115A (telephone), 115B (camera and LCD/TV), 115C (alarm sensor) and 115D (temperature sensor) via interface module 1160 for transceiving information therebetween It is understood that multiple cable modem devices 110A may be mapped to correspond to a given portion of the cable network and may be linked to a given CMTS via the subscriber nodes. Cable modem 110 is coupled to CMTS 144 at the headend for transceiving information to/from security monitor station 130, Internet 149 (via a gateway) and telephony servers 151 via IP switch 145. The audio and video data transmitted from sensors 115A and 115B represents stream oriented data which may be transmitted, for example in response to the occurrence of a given alarm or environmental sensor condition.

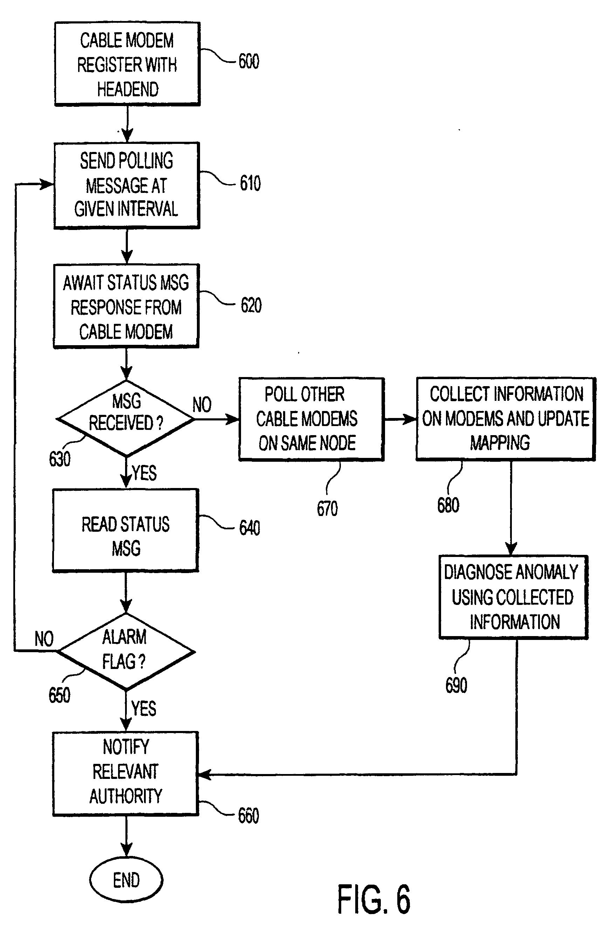

Referring now to Figure 6 in conjunction with Figure 1, the steps involved in the monitoring and diagnostic detection process according to the present invention are as follows. First cable modem 110 registers with cable headend 120 and security monitor central station 130 when power to the cable modem is first applied and the cable is connected to the network 140 (module 600). Information such as the frequency over which modem 110 should transmit, or the frequency modem 110 should receive, is communicated to modem 110. Central station 130 then sends a polling message at a predetermined interval to the modem, e.g. at 10 second intervals (module 610). The modem then responds with a status message (modules 620, 630) The status message includes along with an acknowledgement of the polling request, additional conditional information indicative of various types of security or environmental monitoring. Such information includes, for example, various types of alarm flags or indicators which indicate the conditional status, such as temperature flags, door or window switch alarms indicative of an open door or window, and other safety or home security messages. The messages may be readily programmable to indicate various types of alarm conditions. The central station receives the status message (module 630) and determines the type of response sent from the cable modem (modules 640, 650). Depending on the type of flag set, the central station may respond by notifying the relevant authority, such as the police, fire company, hospital or 911 operator, for example (module 660). Such notification messaging may be by way of an email message, a pager message, an emergency services message, or a particular coded message, for example. In another embodiment, modem 110 receives home monitoring information and generates message data derived from predetermined information in a database within modem 110. The generated message data is communicated to a predetermined message recipient in response to received monitoring information. The message data may comprise one or more of, (a) an email message, (b) a pager message, (c) an emergency services message, and (d) a message indicative code.

If no response is received from the cable modem within a predetermined wait interval, the central station may check other subscribers' connection status to determine if other subscribers on the same cable segment or node are responding (module 670). That is, if a given cable modem fails to respond the central station may be programmed to query whether other cable modems resident on the same cable segment (as the non-responding modem) are responding to polling (module 680). The results of this check would help determine whether the problem is due to a fault associated with a particular cable modem (in the case where other cable modems responding) or if a problem exists in the cable distribution system (the case where multiple cable modems on a cable segment fail to respond) (module 690). In response to the results of this diagnostic activity, the central station may notify the relevant organization of the particular service action recommended (e.g. cable modem service or cable segment service inquiry) by various means as previously described. In the case where multiple subscribers have a service outage, the location of the failures on the cable topology may operate to target the repair service.

The above scenario illustrates a technique for verifying that the data connection to a remote electronic security system is operational. If the data connection is made through a cable modem, the cable modem termination system (CMTS) will be able to detect within a number of seconds that the remote cable modem is no longer transmitting. Since the cable modem is designed to be "always on" (i.e. always responsive to a polling request), it will then set an alarm to indicate that there has been a failure of the modem or of the interconnecting cable. By analyzing conditions at multiple subscribers within a common geographical area, the system can determine whether the alarm is due to a system fault or a problem at an individual subscriber.

Although a system and method according to the present invention has been described, it is not intended to be limited to the specific form set forth herein, but on the contrary, it is intended to cover such alternatives, modifications, and equivalents, as can be reasonably included within the scope of the invention as defined by the appended claims.

## Claims

1. A method for transmitting monitored home information, from a cable modem (110) incorporating a user operated power switch (1110), to a central monitoring station (130), said method comprising the step of establishing a communication link via a packet network (140A) between said cable modem (110) and said central monitoring station (130), said communication link maintained as active regardless of the position of said user operated power switch (1110);
**characterized in that** the method further comprises the steps of:
receiving, at cable modem (110), said monitored home information;
generating home information message at a substantially periodic rate, each of said home information messages including said monitored home information; and
launching each of said home information message from said cable modem (110) for delivery to said central monitoring station (130) via said packet network (140A).

2. The method in accordance with claim 1 wherein the time period between successive messages generated at said substantially periodic rate is less than two minutes.

3. The method according to claim 1 wherein said monitored home information including at least one of:
(a) an alarm indication,
(b) a home appliance status condition, and
(c) a message representative indication.

4. A method according to claim 1 further comprising transmitting at least one of: (a) video image data, and (b) audio data from said cable modem (110) via said communication link over said packet network (140A) to said central monitoring station (130).

5. The method according to claim 1 wherein said packet network (140A) is the Internet.

6. The method according to claim 1 wherein said packet network (140A) is an intranet.

7. A cable modem (110) incorporating a user operated power switch (1110) and used for transmitting monitored home information to a central monitoring station (130) for processing, said cable modem (110) comprising means for establishing a communication link via a packet network (140A) between said cable modem (110) and said central monitoring station (130), said communication link maintained as active regardless of the position of said user operated power switch;
**characterized in that** the cable modem further comprises:
means for receiving, at said cable modem (110), said monitored home information;
means for generating home information message at a substantially periodic rate, each of said home information message including said monitored home information; and
means for launching each of said home information message from said cable modem (110) for delivery to said central monitoring station (130) via said packet network (140A).

8. The cable modem (110) in accordance with claim 7 wherein the time period between successive messages generated at said substantially periodic rate is less than two minutes.

9. The cable modem (110) in accordance with claim 7 wherein said monitored home information including at least one of:
(a) an alarm indication,
(b) a home appliance status condition, and
(c) a message representative indication.

10. The cable modem (110) in accordance with claim 7 wherein said cable modem (110) transmits at least one of: (a) video image data, and (b) audio data via said communication link over said packet network (140A) to said central monitoring station (130).

11. The cable modem (110) in accordance with claim 7 wherein said packet network is the Internet.

12. The cable modem (110) in accordance with claim 7 wherein said packet network is an intranet.

## Patentansprüche

1. Verfahren zur Übertragung von überwachten Heiminformationen von einem Kabelmodem (110) mit einem von einem Benutzer betätigten Leistungsschalter (1110) zu einer zentralen Überwachungsstation (130) mit dem Schritt der Bildung einer Kommunikationsverbindung über ein Paketnetz (140A) zwischen dem Kabelmodem (110) und der zentralen Überwachungsstation (130), wobei die Kommunikationsverbindung als aktiv aufrechterhalten wird, unabhängig von der Lage des vom Benutzer betätigten Leistungsschalters (1110),
**gekennzeichnet durch** folgende Schritte:
Empfang der überwachten Heiminformationen bei dem Kabelmodem (110),
Erzeugung einer Heiminformationsnachricht bei einer im wesentlichen periodischen Rate, wobei jede der Heiminformationsnachrichten die überwachten Heiminformationen enthält, und
Start jeder Heiminformationsnachricht von dem Kabelmodem (110) zur Lieferung zu der zentralen Überwachungsstation (130) über das Paketnetz (140A).

2. Verfahren nach Anspruch 1, wobei die Zeitperiode zwischen aufeinanderfolgenden Nachrichten, die bei der im wesentlichen periodischen Rate erzeugt werden, kleiner als zwei Minuten ist.

3. Verfahren nach Anspruch 1, wobei die überwachten Heiminformationen wenigstens eines der folgenden Merkmale enthalten:
(a) eine Alarmanzeige,
(b) eine Heimanwendungs-Zustandsbedingung und
(c) eine eine Nachricht darstellende Anzeige.

4. Verfahren nach Anspruch 1 mit der Übertragung wenigstens eines der folgenden Punkte: (a) Videobilddaten und (b) Audiodaten von dem Kabelmodem (110) über die Kommunikationsverbindung über das Paketnetz (140A) zu der zentralen Überwachungsstation (130).

5. Verfahren nach Anspruch 1, wobei das Paketnetz (140A) das Internet ist.

6. Verfahren nach Anspruch 1, wobei das Paketnetz (140A) ein Intranet ist

7. Kabelmodem (110) mit einem vom Benutzer betätigten Leistungsschalter (1110) und benutzt zur Übertragung der überwachten Heiminformationen zu einer zentralen Überwachungsstation (130) zur Verarbeitung, wobei das Kabelmodem (110) Mittel zur Bildung einer Kommunikationsverbindung über ein Paketnetz (140A) zwischen dem Kabelmodem (110) und der zentralen Überwachungsstation (130)enthält und die Kommunikationsverbindung als aktiv aufrechterhalten wird, unabhängig von der Stellung des vom Benutzer betätigten Leistungsschalters,
**gekennzeichnet durch**:
Mittel zum Empfang der überwachten Heiminformationen bei dem Kabelmodem (110),
Mittel zur Erzeugung einer Heiminformationsnachricht bei einer im wesentlichen periodischen Rate, wobei jede der Heiminformationen die überwachten Heiminformationen enthält, und
Mittel zum Start jeder der Heiminformationsnachrichten von dem Kabelmodem (110) zur Lieferung zu der zentralen Überwachungsstation (130) über das Paketnetz (140A).

8. Kabelmodem (110) gemäß Anspruch 7, wobei die Zeitperiode zwischen aufeinanderfolgenden Nachrichten, die bei der im wesentlichen periodischen Rate erzeugt werden, kleiner als zwei Minuten ist.

9. Kabelmodem (110) nach Anspruch 7, wobei die überwachten Heiminformationen wenigstens einen der folgenden Punkte enthalten:
(a) eine Alarmanzeige,
(b) eine Heimanwendungs-Zustandsbedingung und
(c) eine eine Nachricht darstellende Anzeige.

10. Kabelmodem (110) nach Anspruch 7, wobei das Kabelmodem (110) wenigstens einen der folgenden Punkte überträgt: (a) Videobilddaten und (b) Audiodaten durch die Kommunikationsverbindung über das Paketnetz (140A) zu der zentralen Überwachungsstation (130).

11. Kabelmodem (110) nach Anspruch 7, wobei das Paketnetz das Internet ist.

12. Kabelmodem (110) nach Anspruch 7, wobei das Paketnetz ein Intranet ist.

## Revendications

1. Une méthode de transmission d'informations domestiques contrôlées, à partir d'un modem câble (110) intégrant un interrupteur (1110) actionné par un utilisateur, vers une station de contrôle centrale (130), ladite méthode comprenant l'étape d'établissement d'une liaison de communication via un réseau de paquets (140A) entre ledit modem câble (110) et ladite station de contrôle centrale (130), ladite liaison de communication étant maintenue active quelle que soit la position dudit interrupteur actionné par l'utilisateur (1110) ;
**caractérisée en ce que** la méthode comprend en outre les étapes :
de réception, au niveau du modem câble (110), desdites informations domestiques contrôlées ;
de génération d'un message d'informations domestiques à un débit sensiblement périodique, chacun des messages d'informations domestiques incluant lesdites informations domestiques contrôlées ; et
de lancement de chaque message d'informations domestiques à partir dudit modem câble (110) à délivrer à ladite station de contrôle centrale (130) via ledit réseau de paquets (140A).

2. La méthode selon la revendication 1, dans laquelle la période entre des messages successifs générés audit débit sensiblement périodique est inférieure à deux minutes.

3. La méthode selon la revendication 1, dans laquelle lesdites informations domestiques contrôlées incluent au moins :
(a) une indication d'alarme,
(b) une condition d'état d'appareil ménager, et
(c) une indication représentant un message.

4. Une méthode selon la revendication 1, comprenant en outre la transmission d'au moins : (a) des données d'images vidéo, et (b) des données audio en provenance dudit modem câble (110) via ladite liaison de communication sur ledit réseau de paquets (140A) vers ladite station de contrôle centrale (130).

5. La méthode selon la revendication 1, dans laquelle ledit réseau de paquets (140A) est Internet.

6. La méthode selon la revendication 1, dans laquelle ledit réseau de paquets (140A) est un intranet.

7. Un modem câble (110) intégrant un interrupteur (1110) actionné par l'utilisateur et utilisé pour transmettre des informations domestiques contrôlées vers une station de contrôle centrale (130) pour le traitement, ledit modem câble (110) comprenant des moyens pour établir une liaison de communication via un réseau de paquets (140A) entre ledit modem câble (110) et ladite station de contrôle centrale (130), ladite liaison de communication étant maintenue active quelle que soit la position dudit interrupteur actionné par l'utilisateur ;
**caractérisé en ce que** le modem câble comprend en outre :
des moyens pour recevoir, au niveau dudit modem câble (110), lesdites informations domestiques contrôlées ;
des moyens pour générer un message d'informations domestiques à un débit sensiblement périodique, chaque message d'informations domestiques incluant lesdites informations domestiques ; et
des moyens pour lancer chacun desdits messages d'informations domestiques à partir dudit modem câble (110) à délivrer à ladite station de contrôle centrale (130) via ledit réseau de paquets (140A).

8. Le modem câble (110) selon la revendication 7, dans lequel la période entre des messages successifs générés audit débit sensiblement périodique est inférieure à deux minutes.

9. Le modem câble (110) selon la revendication 7, dans lequel lesdites informations domestiques contrôlées incluent au moins:
(a) une indication d'alarme,
(b) une condition d'état d'appareil ménager, et
(c) une indication représentant un message.

10. Le modem câble (110) selon la revendication 7, dans lequel ledit modem câble (110) transmet au moins : (a) des données d'images vidéo, et (b) des données audio via ladite liaison de communication sur ledit réseau de paquets (140A) vers ladite station de contrôle centrale (130).

11. Le modem câble (110) selon la revendication 1, dans lequel ledit réseau de paquets est Internet.

12. Le modem câble (110) selon la revendication 1, dans lequel ledit réseau de paquets est un intranet.
